# EUROPEAN PATENT SPECIFICATION

(11) **EP 4 172 749 B1**
(45) Date of publication and mention of the grant of the patent: **27.05.2026**
(21) Application number: 20746603.8
(22) Date of filing: 23.07.2020
(51) Int. Cl.: G06F 3/06

(54) **BLOCK STORAGE DEVICE AND METHOD FOR DATA COMPRESSION**
BLOCKSPEICHERVORRICHTUNG UND VERFAHREN ZUR DATENKOMPRIMIERUNG
DISPOSITIF DE STOCKAGE DE BLOCS ET PROCÉDÉ DE COMPRESSION DE DONNÉES

(43) Date of publication of application: 03.05.2023
(73) Proprietor: Huawei Technologies Co., Ltd., Longgang District, Shenzhen, Guangdong 518129 (CN)
(72) Inventor: NATANZON, Assaf, 80992 Munich (DE); SCHNEIDER, Zvi, 80992 Munich (DE)
(74) Representative: Roth, Sebastian
(86) International application number: PCT/EP2020/070795
(87) International publication number: WO 2022/017604

(56) References cited:
- US-A1- 2011 238 914
- US-A1- 2018 329 631
- US-B1- 10 430 383

## Description

### TECHNICAL FIELD

The present disclosure relates to the field of storage devices, in particular block storage devices. More specifically, a device and a method are provided, which enable applying large block compression to a data block, if de-duplication is not possible.

### BACKGROUND

Patent publication US 2011/238914 A1 discloses the combination of deduplication and compression of data during in-line processing, patent publication US 10 430 383 B1 discloses the processing of data involving compression, and patent publication US 2018/329631 A1 discloses the combining of de-duplication and compression in a data storage system.

Conventional storage devices that implement two phase data reduction are designed to minimize CPU usage during an initial inline phase and maximize data-reduction during later background processing.

During the inline phase, the conventional storage device generates a hash fingerprint of an input data block and compares it with existing fingerprints. If a match is found, the storage device performs de-duplication. That is, rather than storing the data block, it stores a pointer to an existing, identical data block. If de-duplication is not possible, the system compresses and stores the data. During the background process, the conventional storage device attempts to further improve size of the stored data block.

Conventional storage devices may use several data reduction methods in the inline phase: As already mentioned, a conventional approach is fixed size de-duplication. In this approach an input data block is divided into aligned blocks of a fixed size, for example, 4 KB, 8KB, 16 KB, etc. For each block, a strong hash fingerprint is generated. If a block that is to be written has the same signature as an already-written block, it is considered identical. Therefore, instead of storing the data again, a pointer is kept to the identical block.

A further conventional approach is similarity compression. In this approach, a similarity hash function (for example, a min-hash function) is generated for each data block and stored in an opportunity table. The conventional storage device considers data blocks similar if they have the same similarity hash. This means that a part of data in a data block is identical to a part of data in another block. Thus, a part of one data block is identical to a part of another data block and overall, the data blocks are similar, but not identical. This allows storage of only the non-identical part of a data block and use of a pointer to that part of a similar data block which is identical to the part of a current data block, or perform a differential compression using the similar block as a reference.

The present disclosure provides a solution that determines which data-reduction method will yield the best result. For example, a data reduction method that results in better CPU performance and/or more efficient use of disk space, than another available method. Further, full advantage of the 2-phase approach can be can be taken. For example, different data-reduction methods during each phase in accordance with the design considerations and resources available in each phase lead to more efficient and effective reduction of required space. Again in other words, the present disclosure employs a solution that analyzes a range of parameters, such as the size of the data block, the type of read/writes normally performed at the current addresses, or the compressibility of the data, and chooses a most appropriate data-reduction method based on the outcome of that analysis. Furthermore, this analysis and decision-flow uses a 2-phase approach, with differential logic applied across inline and background processing. This allows the block storage device to prioritize performance during inline processing, when CPU usage is most critical, and to prioritize disk-space during background processing, when CPU is more available. The block storage device in particular allows to make use of at least one of these data reduction methods: de-duplication of identical blocks, compression of large blocks, compression of small blocks, similarity compression.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof, as long as they fall within the scope defined by the appended claims.

### BRIEF DESCRIPTION OF DRAWINGS

The above-described aspects and implementation forms of the present disclosure will be explained in the following description of specific embodiments in relation to the enclosed drawings, in which
- FIG. 1: shows a schematic view of a device according to an embodiment of the present disclosure;
- FIG. 2: shows a schematic view of a device according to an embodiment of the present disclosure in more detail;
- FIG. 3: shows a schematic view of an operating manner according to the present disclosure;
- FIG. 4: shows a schematic view of an operating manner according to the present disclosure;
- FIG. 5: shows another schematic view of a method according to an embodiment of the present disclosure.

### DETAILED DESCRIPTION OF EMBODIMENTS

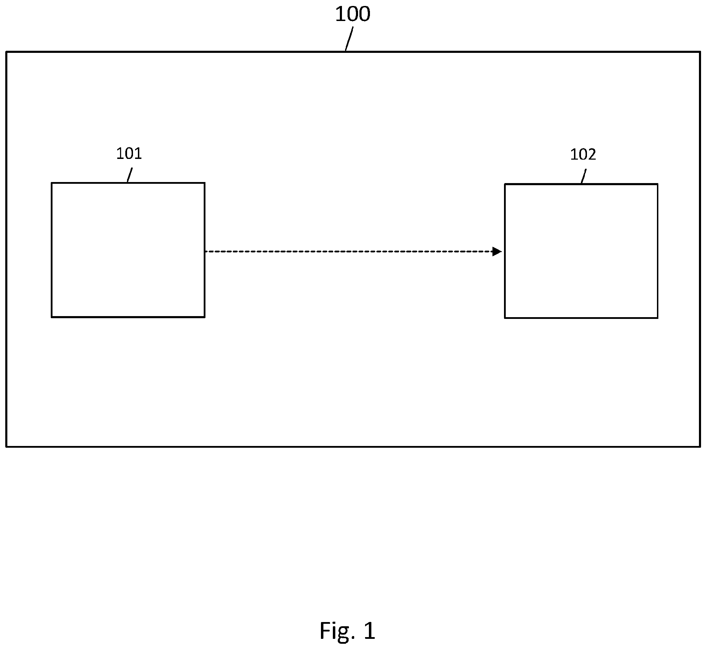

FIG. 1 shows a schematic view of a block storage device 100 according to an embodiment of the present disclosure. The block storage device 100 is for data compression and thus is configured to, if it is determined, by the block storage device 100, that a data block 101 is to be written to a large block storage area 102 of the block storage device 100, determine if the data block 101 can be de-duplicated.

Further, the block storage device 100 is configured to, if the data block 101 cannot be de-duplicated, store the data block 101 using large block compression. The data block 101 is in particular stored in the large block storage area 102.

All these steps are performed during a first operating phase. The first operating phase in particular can be an in-line phase.

Optionally, the large block storage area 102 can be an area where data blocks 101 having an average size larger than a predefined threshold are written to, and/or are read from. The large block storage area in particular may be part of a physical disc, a physical volume, a virtual disc, or a virtual volume. The average size of the to be written or to be read data block can optionally be based on a read statistic and/or a write statistic.

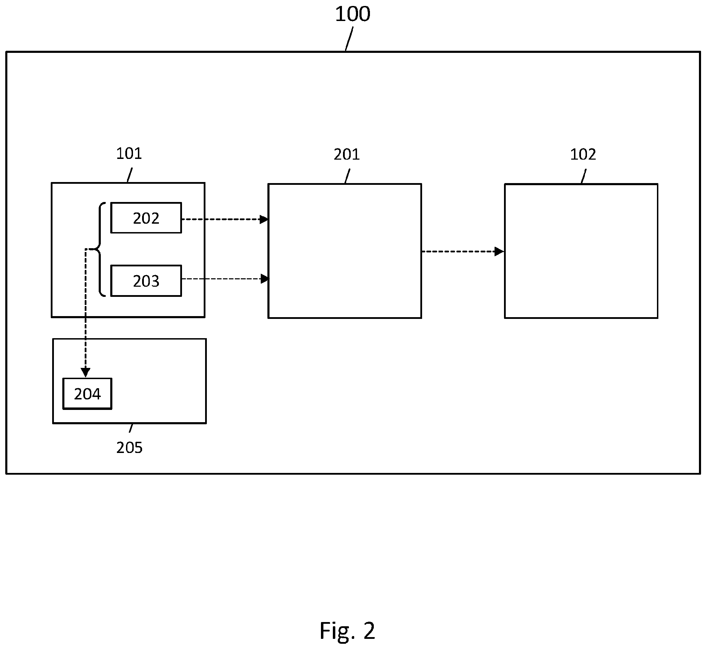

FIG. 2 shows a schematic view of a block storage device 100 according to an embodiment of the present disclosure in more detail. The device 100 shown in FIG. 2 comprises all features and functionality of the device 100 of FIG. 1, as well as the following optional features:
As it is illustrated in FIG. 2, the block storage device 100 optionally can be configured to, if the data block 101 can be de-duplicated, de-duplicate and compress the data block 101 and store the resulting data block 201. That is, instead of large block compression, de-duplication and compression of the data block 101 is performed. This kind of compression is different from large block compression in particular in that it is applied to data blocks which are smaller than the large blocks.

Further optionally, if the data block 101 can be de-duplicated, the block storage device 100 can compare a size resulting from de-duplication and compression of the data block 101 with a size resulting from large block compression of the data block 101. This evaluation assists in determining the more effective way of data reduction. If the size resulting from de-duplication and compression is larger than or equal to the size resulting from large block compression, the block storage device 100 can store the data block 101 using large block compression.

As it is further illustrated in FIG. 2, the block storage device 100 can de-duplicate a first part of sub blocks 202 of the data block 101. The block storage device 100 also can compress a second part of sub blocks 203 of the data block 101. The data block 201 which results from de-duplication and compression can then be stored by the block storage device 100. This can e.g. be done in the large block storage area 102, or in a conventional storage area of the block storage device 100. For example, if the data block 101 has a size of 1 MB, the first part of sub blocks 202 e.g. may comprise two sub blocks with a size of 256 KB each, and the second part of sub block 203 e.g. may comprise four sub blocks with a size of 128 KB each. However, any kind of distribution of sub block which follows this principle is possible.

In a specific embodiment, two levels of block sizes are used. In this embodiment, the data block 101 has a size of 512 KB, and a sub block has a size of 8 KB. Thus, a 512 KB data block 101 can either be compressed as a single block or as 64 sub blocks of 8KB size, wherein each 8 KB sub block can either de-duplicated or compressed alone.

As it is further illustrated in FIG. 2, to prepare for similarity deduplication (which e.g. can be performed in a second operating phase of the block storage device 100), for each sub block 202, 203 of the data block 101, the block storage device 100 can write a similarity hash 204 to a similarity hash table 205. This step is in particular performed during the first operating phase of the block storage device 100.

Further optionally, in a second operating phase, the block storage device 100 can determine, based on a similarity hash 204, if a data block 101 stored in the first operating phase can be further reduce in size using similarity de-duplication. This similarity hash 204 e.g. can be the similarity hash stored in the similarity hash table 205 during the first operating phase.

The block storage device 100 optionally can determine space which is required for storing the data block 101 using similarity de-duplication. The block storage device 100 optionally can also determine space which is required for storing the data block (101) in its present format. This enables to only store the data block 101 in the data storage 102 using similarity de-duplication, if the space required for storing the data block 101 using similarity de-duplication is less than the space required for storing the data block 101 in its present format.

In particular, the second operating phase can be an offline phase.

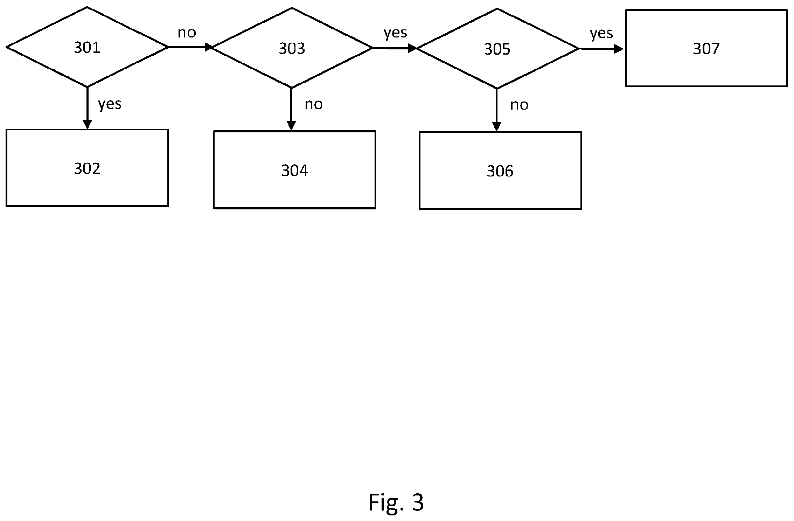

FIG. 3 describes an operating scenario which is performed during the first operating phase in more detail.

In step 301, the block storage device 100 checks, if a data block 101 can be de-duplicated (based on a hash fingerprint, it can be determined that an identical data block is already written to a disk), and if so, performs deduplication (see step 302). In any case, in step 301, the block storage device 100 generates a min-hash (i.e. the similarity hash 204) which is to be added to an opportunity table (i.e. the similarity hash table 205) to enable the possibility of similarity de-duplication later in a second operating phase.

If the data block 101 cannot be de-duplicated, the block storage device 100 checks (in step 303) a prediction table to determine, if an available range of physical addresses is usually used for writing and reading small blocks of data or large blocks of data (in other words, it is determined if the data block 101 is to be written to a large block storage area 102). If the current range is usually used for writing and reading small blocks of data, the system proceeds as usual (i.e. it stores small blocks of data), as it is illustrated in step 304.

If it is identified that the data block 101 is to be written to an area where most reads and write are done in large blocks, then the block storage device 100 analyses (in step 305), if large-block compression would yield to better compression than small-block compression. If large block compression would not lead to better compression, the block storage device proceeds as usual (i.e. it stores the compressed data block 101), see step 306. If large block compression would lead to better compression, then the block storage device 100 stores the compressed data block 101 set using large block compression (see step 307). This can e.g. be implemented by one of the following methods: Large block compression can be used to tag large block storage areas 102 as containing identical data. The block storage device 100 e.g. can write a same grain (physical) address at a same offset in each relevant large block storage area 102, or the block storage device 100 can set a bit indicating the start and end of a range of identical large block storage areas 102.

In addition, if the data block 101 can be de-duplicated, the block storage device 100 may also determine if large block compression of the data block 101 leads to a better result, or if a combination of de-duplicating and compressing the data block 101 leads to a better result, and choose the better option.

Thus, at the end of the first operating phase, the block storage device 100 generated and saved a min-hash and will have either have de-duplicated the data block 101 and/or have stored the data block 101 compressed in small blocks; or will have stored the data block 101 using large block compression.

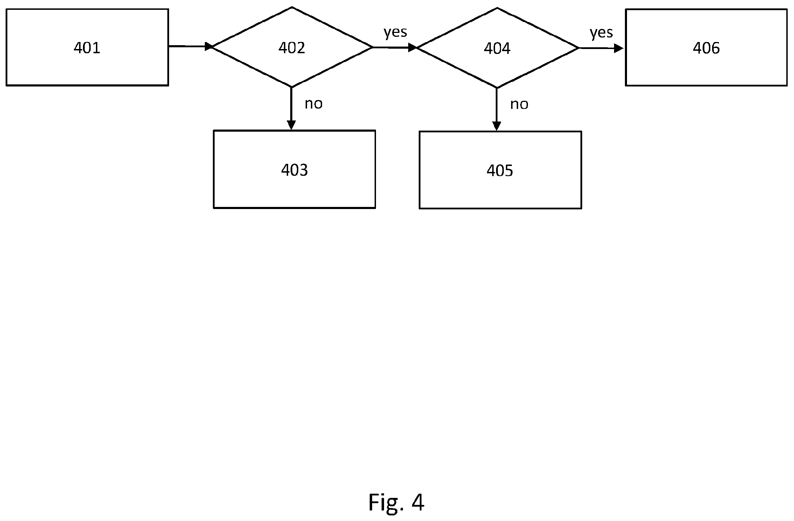

FIG. 4 describes an operating scenario which is performed during the first operating phase in more detail.

As it was e.g. explained above, the inline processing (i.e. the first operating phase) prioritized reducing CPU usage over minimizing disk usage. Then, during background processing (i.e. the second operating phase), when CPU usage is less critical, the block storage device 100 attempts to further optimize disk usage as described in the following. Step 401 of FIG. 4 is in particular performed after step 307 of FIG. 3.

As shown in step 402, in the second operating phase, for data blocks 401 compressed in large blocks of data, the block storage device 100 checks an opportunity table (i.e. the similarity hash table 205) to see, if there is an option for similarity de-duplication (i.e. if there is another data block 101, with the same min-hash).

If similarity de-duplication is not possible, the block storage device 100 does nothing, and the data block 401 remains large-block compressed, see step 403.

If similarity de-duplication is possible, then the block storage device 100 analyzes if similarity de-duplication would lead to a better result than large-block compression, see step 404.

If similarity de-duplication would lead to lower data reduction than large-block compression, the system does nothing and the data block 101 remains large-block compressed, see step 405.

If similarity de-duplication would lead to better data reduction than large-block compression, then the system performs similarity de-duplication and the data block 101 is stored e.g. in 8k data blocks with similarity de-duplication pointers where relevant.

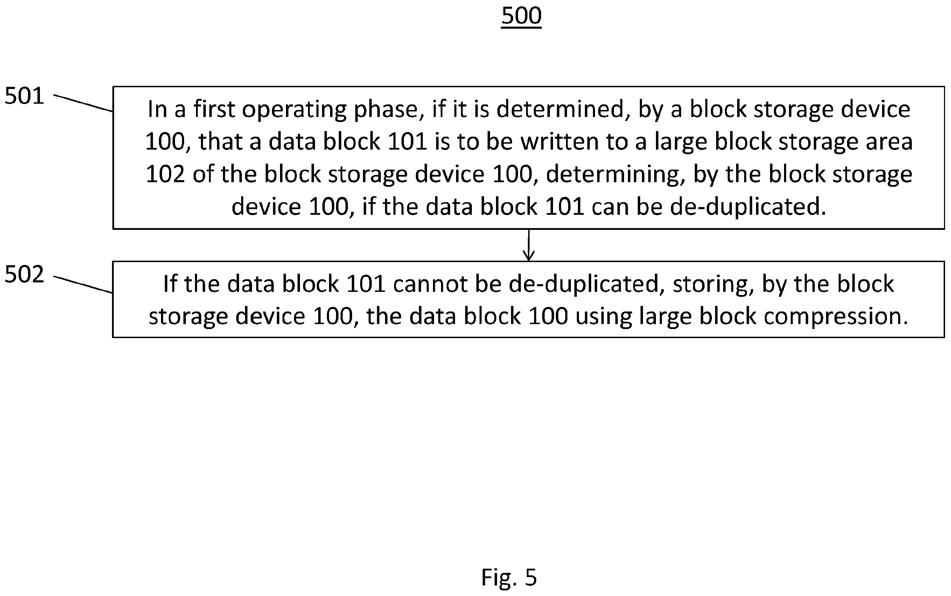

FIG. 5 shows a schematic view of a method 500 according to an embodiment of the present disclosure. The method 500 is for data compression. In a first operating phase, the method comprises a step of, if it is determined, by a block storage device 100, that a data block 101 is to be written to a large block storage area 102 of the block storage device 100, determining 501, by the block storage device 100, if the data block 101 can be de-duplicated. The method comprises (still in the first operating phase) a further step of, if the data block 101 cannot be de-duplicated, storing 502, by the block storage device 100, the data block 100 using large block compression.

The present disclosure has been described in conjunction with various embodiments as examples as well as implementations. However, other variations can be understood and effected by those persons skilled in the art and practicing the claimed disclosure, from the studies of the drawings, this disclosure, and the independent claims. In the claims as well as in the description, the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A block storage device (100) for data compression, configured to, in a first operating phase:
- if it is determined, by the block storage device (100), that a data block (101) is to be written to a large block storage area (102) of the block storage device (100), determine if the data block (101) can be de-duplicated by determining if there is already a stored data block identical to said data block (101), wherein the large block storage area (102) is an area where data blocks (101) having an average size larger than a predefined threshold are written to, and/or are read from,
- if the data block (101) can be de-duplicated, apply de-duplication before storing the data block (101), and
- if the data block (101) cannot be de-duplicated, store the data block (101) using large block compression,
wherein the block storage device (100) is further configured to:
for each sub block (202, 203) of the data block (101), write a similarity hash (204) to a similarity hash table (205); and
in a second operating phase:
using similarity de-duplication, based on the similarity hashes (204) stored in the similarity hash table (205), in case that a data block (101) stored in the first operating phase can be further reduced in size, wherein large block compression comprises compressing the whole data block (101) at once, and
wherein similarity de-duplication comprises that de-duplication is applied to all sub blocks (202, 203) of a data block (101).

2. The block storage device (100) according to claim 1, further configured to determine the average size based on a read statistic and/or a write statistic.

3. The block storage device (100) according to claim 1 or 2, wherein the first operating phase is an in-line phase.

4. The block storage device (100) according to any one of the preceding claims, wherein the block storage device (100) is further configured to, if the data block (101) can be de-duplicated, de-duplicate and compress the data block (101) and store the resulting data block (201).

5. The block storage device (100) according to any one of the preceding claims, wherein the block storage device (100) is further configured to, if the data block (101) can be de-duplicated, compare a size resulting from de-duplication and compression of the data block (101) with a size resulting from large block compression of the data block (101).

6. The block storage device (100) according to claim 5, further configured to, if the size resulting from de-duplication and compression is larger than or equal to the size resulting from large block compression, store the data block (101) using large block compression.

7. The block storage device (100) according to claims 4 to 6, wherein the block storage device (100) is further configured to de-duplicate a first part of sub blocks (202) of the data block (101) and compress a second part of sub blocks (203) of the data block (101) and store the resulting data block (201), to de-duplicate and compress the data block (101).

8. The block storage device (100) according to any one of claims 1 to 7, further configured to determine space required for storing the data block (101) using similarity de-duplication based on similarity hashes (204) stored in a similarity hash table (205) and to determine space required for storing the data block (101) in its present format.

9. The block storage device (100) according to claim 8, further configured to only store the data block (101) in the data storage (102) using similarity de-duplication, if the space required for storing the data block (101) using similarity de-duplication is less than the space required for storing the data block (101) in its present format.

10. The block storage device (100) according to any one of the preceding claims, wherein the second operating phase is an offline phase.

11. A method (500) for data compression, the method (500) comprising the steps of, in a first operating phase:
- if it is determined, by a block storage device (100), that a data block (101) is to be written to a large block storage area (102) of the block storage device (100), determining (501), by the block storage device (100), if the data block (101) can be de-duplicated by determining if there is already a stored data block identical to said data block (101), wherein the large block storage area (102) is an area where data blocks (101) having an average size larger than a predefined threshold are written to, and/or are read from,
- if the data block (101) can be de-duplicated, applying de-duplication before storing the data block, and
- if the data block (101) cannot be de-duplicated, storing (502), by the block storage device (100), the data block (100) using large block compression,
wherein the method further comprises:
for each sub block (202, 203) of the data block (101), writing, by the block storage device (100), a similarity hash (204) to a similarity hash table (205);
and in a second operating phase:
using similarity de-duplication, by the block storage device (100), based on the similarity hashes (204) stored in the similarity hash table (205), in case that a data block (101) stored in the first operating phase can be further reduce in size, wherein large block compression comprises compressing the whole data block (101) at once, and
wherein similarity de-duplication comprises that de-duplication is applied to all sub blocks (202, 203) of a data block (101).

12. A computer program product comprising instructions which, when the program is executed by a computer, cause the computer to carry out the steps of the method (500) of claim 11.

## Patentansprüche

1. Blockspeichervorrichtung (100) zur Datenkomprimierung, die in einer ersten Betriebsphase zu Folgendem konfiguriert ist:
- wenn von der Blockspeichervorrichtung (100) bestimmt wird, dass ein Datenblock (101) in einen großen Blockspeicherbereich (102) der Blockspeichervorrichtung (100) zu schreiben ist, Bestimmen, ob der Datenblock (101) dedupliziert werden kann, durch Bestimmen, ob bereits ein gespeicherter Datenblock vorhanden ist, der mit dem Datenblock (101) identisch ist, wobei der große Blockspeicherbereich (102) ein Bereich ist, in den Datenblöcke (101), die eine durchschnittliche Größe aufweisen, die größer als ein vordefinierter Schwellenwert ist, geschrieben werden und/oder aus dem sie gelesen werden,
- wenn der Datenblock (101) dedupliziert werden kann, Anwenden der Deduplikation vor dem Speichern des Datenblocks (101) und
- wenn der Datenblock (101) nicht dedupliziert werden kann, Speichern des Datenblocks (101) unter Verwendung einer Großblockkomprimierung,
wobei die Blockspeichervorrichtung (100) ferner zu Folgendem konfiguriert ist:
für jeden Unterblock (202, 203) des Datenblocks (101), Schreiben eines Ähnlichkeits-Hashes (204) in eine Ähnlichkeits-Hashtabelle (205); und
in einer zweiten Betriebsphase zu Folgendem konfiguriert ist:
Verwenden einer Ähnlichkeitsdeduplizierung basierend auf den Ähnlichkeits-Hashes (204), die in der Ähnlichkeits-Hashtabelle (205) gespeichert sind, falls ein Datenblock (101), der in der ersten Betriebsphase gespeichert wurde, weiter in der Größe verkleinert werden kann,
wobei die Großblockkomprimierung gleichzeitiges Komprimieren des gesamten Datenblocks (101) umfasst und
wobei die Ähnlichkeitsdeduplizierung umfasst, dass die Deduplizierung auf alle Unterblöcke (202, 203) eines Datenblocks (101) angewendet wird.

2. Blockspeichervorrichtung (100) nach Anspruch 1, die ferner dazu konfiguriert ist, die durchschnittliche Größe basierend auf einer Lesestatistik und/oder einer Schreibstatistik zu bestimmen.

3. Blockspeichervorrichtung (100) nach Anspruch 1 oder 2, wobei die erste Betriebsphase eine Inline-Phase ist.

4. Blockspeichervorrichtung (100) nach einem der vorhergehenden Ansprüche, wobei die Blockspeichervorrichtung (100) ferner dazu konfiguriert ist, wenn der Datenblock (101) dedupliziert werden kann, den Datenblock (101) zu deduplizieren und zu komprimieren und den resultierenden Datenblock (201) zu speichern.

5. Blockspeichervorrichtung (100) nach einem der vorhergehenden Ansprüche, wobei die Blockspeichervorrichtung (100) ferner dazu konfiguriert ist, wenn der Datenblock (101) dedupliziert werden kann, eine Größe, die sich aus der Deduplikation und Komprimierung des Datenblocks (101) ergibt, mit einer Größe, die sich aus der Großblockkomprimierung des Datenblocks (101) ergibt, zu vergleichen.

6. Blockspeichervorrichtung (100) nach Anspruch 5, die ferner dazu konfiguriert ist, wenn die Größe, die aus der Deduplikation und Komprimierung resultiert, größer oder gleich der Größe ist, die aus der Großblockkomprimierung resultiert, den Datenblock (101) unter Verwendung der Großblockkomprimierung zu speichern.

7. Blockspeichervorrichtung (100) nach den Ansprüchen 4 bis 6, wobei die Blockspeichervorrichtung (100) ferner dazu konfiguriert ist, einen ersten Teil der Unterblöcke (202) des Datenblocks (101) zu deduplizieren und einen zweiten Teil der Unterblöcke (203) des Datenblocks (101) zu komprimieren und den resultierenden Datenblock (201) zu speichern, um den Datenblock (101) zu deduplizieren und zu komprimieren.

8. Blockspeichervorrichtung (100) nach einem der Ansprüche 1 bis 7, die ferner dazu konfiguriert ist, Platz zu bestimmen, der für das Speichern des Datenblocks (101) unter Verwendung der Ähnlichkeitsdeduplizierung basierend auf den Ähnlichkeits-Hashes (204), die in einer Ähnlichkeits-Hashtabelle (205) gespeichert sind, benötigt wird, und Platz zu bestimmen, der zum Speichern des Datenblocks (101) in seinem gegenwärtigen Format benötigt wird.

9. Blockspeichervorrichtung (100) nach Anspruch 8, die ferner dazu konfiguriert ist, den Datenblock (101) nur unter Verwendung der Ähnlichkeitsdeduplizierung in dem Datenspeicher (102) zu speichern, wenn der Platz, der für das Speichern des Datenblocks (101) unter Verwendung der Ähnlichkeitsdeduplizierung benötigt wird, kleiner ist als der Platz, der für das Speichern des Datenblocks (101) in seinem gegenwärtigen Format benötigt wird.

10. Blockspeichervorrichtung (100) nach einem der vorhergehenden Ansprüche, wobei die zweite Betriebsphase eine Offline-Phase ist.

11. Verfahren (500) zur Datenkomprimierung, wobei das Verfahren (500) in einer ersten Betriebsphase die folgenden Schritte umfasst:
- wenn von einer Blockspeichervorrichtung (100) bestimmt wird, dass ein Datenblock (101) in einen großen Blockspeicherbereich (102) der Blockspeichervorrichtung (100) zu schreiben ist, Bestimmen (501), durch die Blockspeichervorrichtung (100), ob der Datenblock (101) dedupliziert werden kann, durch Bestimmen, ob bereits ein gespeicherter Datenblock vorhanden ist, der mit dem Datenblock (101) identisch ist,
wobei der große Blockspeicherbereich (102) ein Bereich ist, in den Datenblöcke (101), die eine durchschnittliche Größe aufweisen, die größer als ein vordefinierter Schwellenwert ist, geschrieben werden und/oder aus dem sie gelesen werden,
- wenn der Datenblock (101) dedupliziert werden kann, Anwenden der Deduplikation vor dem Speichern des Datenblocks und
- wenn der Datenblock (101) nicht dedupliziert werden kann, Speichern (502), durch die Blockspeichervorrichtung (100), des Datenblocks (100) unter Verwendung einer Großblockkomprimierung,
wobei das Verfahren ferner Folgendes umfasst:
für jeden Unterblock (202, 203) des Datenblocks (101), Schreiben, durch die Blockspeichervorrichtung (100), eines Ähnlichkeits-Hashes (204) in eine Ähnlichkeits-Hashtabelle (205);
und in einer zweiten Betriebsphase die folgenden Schritte umfasst:
Verwenden einer Ähnlichkeitsdeduplizierung, durch die Blockspeichervorrichtung (100), basierend auf den Ähnlichkeits-Hashes (204), die in der Ähnlichkeits-Hashtabelle (205) gespeichert sind, falls ein Datenblock (101), der in der ersten Betriebsphase gespeichert wurde, weiter in der Größe verkleinert werden kann,
wobei die Großblockkomprimierung gleichzeitiges Komprimieren des gesamten Datenblocks (101) umfasst und
wobei die Ähnlichkeitsdeduplizierung umfasst, dass die Deduplizierung auf alle Unterblöcke (202, 203) eines Datenblocks (101) angewendet wird.

12. Computerprogrammprodukt, das Anweisungen umfasst, die, wenn das Programm durch einen Computer ausgeführt wird, den Computer dazu veranlassen, die Schritte des Verfahrens (500) nach Anspruch 11 auszuführen.

## Revendications

1. Dispositif de stockage de blocs (100) pour une compression de données, configuré pour, dans une première phase opérationnelle :
- s'il est déterminé, par le dispositif de stockage de blocs (100), qu'un bloc de données (101) doit être écrit dans une zone de stockage de gros blocs (102) du dispositif de stockage de blocs (100), déterminer si le bloc de données (101) peut être dédupliqué en déterminant s'il existe déjà un bloc de données stocké identique audit bloc de données (101),
dans lequel la zone de stockage de gros blocs (102) est une zone où des blocs de données (101) ayant une taille moyenne supérieure à un seuil prédéfini sont écrits et/ou lus,
- si le bloc de données (101) peut être dédupliqué, appliquer la déduplication avant de stocker le bloc de données (101), et
- si le bloc de données (101) ne peut pas être dédupliqué, stocker le bloc de données (101) en utilisant la compression de gros blocs,
dans lequel le dispositif de stockage de blocs (100) est en également configuré pour :
pour chaque sous-bloc (202, 203) du bloc de données (101), écrire un hachage de similarité (204) dans une table de hachage de similarité (205) ; et
dans une seconde phase opérationnelle :
utiliser une déduplication par similarité, sur la base des hachages de similarité (204) stockés dans la table de hachage de similarité (205), dans le cas où un bloc de données (101) stocké dans la première phase opérationnelle peut être encore réduit en taille,
dans lequel la compression de gros blocs comprend la compression de l'ensemble du bloc de données (101) en une seule fois, et
dans lequel la déduplication par similarité comprend que la déduplication est appliquée à tous les sous-blocs (202, 203) d'un bloc de données (101).

2. Dispositif de stockage de blocs (100) selon la revendication 1, configuré également pour déterminer la taille moyenne sur la base d'une statistique de lecture et/ou d'une statistique d'écriture.

3. Dispositif de stockage de blocs (100) selon la revendication 1 ou 2, dans lequel la première phase opérationnelle est une phase en ligne.

4. Dispositif de stockage de blocs (100) selon l'une quelconque des revendications précédentes, dans lequel le dispositif de stockage de blocs (100) est également configuré pour, si le bloc de données (101) peut être dédupliqué, dédupliquer et compresser le bloc de données (101) et stocker le bloc de données résultant (201).

5. Dispositif de stockage de blocs (100) selon l'une quelconque des revendications précédentes, dans lequel le dispositif de stockage de blocs (100) est également configuré pour, si le bloc de données (101) peut être dédupliqué, comparer une taille résultant de la déduplication et de la compression du bloc de données (101) avec une taille résultant de la compression de gros blocs du bloc de données (101).

6. Dispositif de stockage de blocs (100) selon la revendication 5, configuré également pour, si la taille résultant de la déduplication et de la compression est supérieure ou égale à la taille résultant de la compression de gros blocs, stocker le bloc de données (101) en utilisant la compression de gros blocs.

7. Dispositif de stockage de blocs (100) selon les revendications 4 à 6, dans lequel le dispositif de stockage de blocs (100) est également configuré pour dédupliquer une première partie de sous-blocs (202) du bloc de données (101) et compresser une seconde partie de sous-blocs (203) du bloc de données (101) et stocker le bloc de données résultant (201), pour dédupliquer et compresser le bloc de données (101).

8. Dispositif de stockage de blocs (100) selon l'une quelconque des revendications 1 à 7, configuré également pour déterminer l'espace requis pour stocker le bloc de données (101) en utilisant une déduplication par similarité basée sur des hachages de similarité (204) stockés dans une table de hachage de similarité (205) et pour déterminer l'espace requis pour stocker le bloc de données (101) dans son format actuel.

9. Dispositif de stockage de blocs (100) selon la revendication 8, configuré également pour ne stocker le bloc de données (101) dans le stockage de données (102) qu'en utilisant la déduplication par similarité, si l'espace requis pour stocker le bloc de données (101) en utilisant la déduplication par similarité est inférieur à l'espace requis pour stocker le bloc de données (101) dans son format actuel.

10. Dispositif de stockage de blocs (100) selon l'une quelconque des revendications précédentes, dans lequel la seconde phase opérationnelle est une phase hors ligne.

11. Procédé (500) de compression de données, le procédé (500) comprenant les étapes suivantes, dans une première phase opérationnelle :
- s'il est déterminé, par un dispositif de stockage de blocs (100), qu'un bloc de données (101) doit être écrit dans une zone de stockage de gros blocs (102) du dispositif de stockage de blocs (100), le fait de déterminer (501) par un dispositif de stockage de blocs (100) si le bloc de données (101) peut être dédupliqué en déterminant s'il existe déjà un bloc de données stocké identique audit bloc de données (101),
dans lequel la zone de stockage de gros blocs (102) est une zone où des blocs de données (101) ayant une taille moyenne supérieure à un seuil prédéfini sont écrits et/ou lus,
- si le bloc de données (101) peut être dédupliqué, l'application de la déduplication avant de stocker le bloc de données, et
- si le bloc de données (101) ne peut pas être dédupliqué, le stockage (502), par le dispositif de stockage de blocs (100), du bloc de données (100) en utilisant la compression de gros blocs,
dans lequel le procédé comprend également :
pour chaque sous-bloc (202, 203) du bloc de données (101), l'écriture, par le dispositif de stockage de blocs (100), d'un hachage de similarité (204) dans une table de hachage de similarité (205) ;
et dans une seconde phase opérationnelle :
l'utilisation d'une déduplication par similarité, par le dispositif de stockage de blocs (100), sur la base des hachages de similarité (204) stockés dans la table de hachage de similarité (205), dans le cas où un bloc de données (101) stocké dans la première phase d'opération peut être encore réduit en taille,
dans lequel la compression de gros blocs comprend la compression de l'ensemble du bloc de données (101) en une seule fois, et
dans lequel la déduplication par similarité comprend que la déduplication est appliquée à tous les sous-blocs (202, 203) d'un bloc de données (101).

12. Produit de programme informatique comprenant des instructions qui, lorsque le programme est exécuté par un ordinateur, amènent l'ordinateur à réaliser les étapes du procédé (500) selon la revendication 11.
